# EUROPEAN PATENT APPLICATION

(11) **EP 1 353 164 A1**
(43) Date of publication of application: **15.10.2003**
(21) Application number: 02252624.8
(22) Date of filing: 12.04.2002
(51) Int. Cl.: G01N 15/08

(54) **Sorbate analysis method and apparatus**

(71) Applicant: Sherwood Scientific Ltd, Cambridge CB1 8DH (GB)
(72) Inventor: Nowinski, Stefan, Cambridge CB3 9EA (GB); Bogdanski, Stan Lucian, Alderley Edge, Cheshire SK9 7XD (GB)
(74) Representative: Brunner, Michael John

(57) **Abstract**

An analytical method for monitoring the desorption of a sorbate from a particulate sample, the method comprising the steps of: introducing the particulate sample into a control container, mixing the sample; passing a carrier gas through the container such that it permeates the sample; repeatedly measuring the concentration of the sorbate in the outlet gas as it leaves the container; and analysing the readings from the measuring step.

## Description

The invention relates to a sorbate analysis method and an apparatus for carrying out that method.

In particular, the invention may incorporate a laboratory fluid bed drying apparatus and is designed to achieve two functions, firstly that of an analytical instrument and secondly that of a programmable controlled sample processor. In the first function, the analysis is directed towards defining the critical parameters of a sorbate / sorbent system in terms of establishing equilibrium constants at different temperatures, the dynamics of the sorption / desorption processes, the effects of other substances on sorbate / sorbent interaction, the holding capacity of a sorbent towards a sorbate, and determining how the sorbate is held by the sorbent. In the second function, the sample processor can treat a sorbate/sorbent system in a predefined manner to achieve a desired end product while gathering information during the processing which validates that the process and the sample have behaved in the predicted manner and that the desired end product has been obtained. The analytical results obtained while using the invention in its first function can be used to define the conditions required to obtain a desired end product when operating the invention in its second function.

We define a "sorbate" as any substance which is volatile or can be made volatile and which can be partly or wholly distributed between a particulate solid, which we define as the "sorbent", and a mobile fluid phase, which we define as a "carrier". The sorbate can, under certain conditions, be removed from the sorbent and be contained mainly within the fluid phase, such as when the sample is desorbed. Conversely, under different conditions, the sorbate can be removed from the mobile fluid by a process known as sorption phase and be held mainly in the particulate sorbent to purify the carrier. A "sample" refers to the solid particulate sorbent which may or may not contain a sorbate.

The critical moisture content is a sorbate concentration within the sorbent related to the saturated particle. Internal moisture is comprised of adsorbed and absorbed components which is distinguished as follows. Absorbed moisture is that which is retained in the centre of each particle and the adsorbed moisture is that which is in the outer layers of the particles. Thus, absorbed sorbate is surrounded by a "shell" of adsorbed sorbate. The adsorbed component of a sample may be affected by particle size and outer surface texture of a particle. Changes in the concentration of the adsorbed component can affect the rate of sorbate transfer between carrier and sample.

The description focuses on the use of water as the sorbate but can be applied to any liquid sorbate which can be made volatile.

In the case where the sorbate is water and starting from a dry solid particulate sample, the initial introduction of water is sorbed into the dry particle. This continues until the particles are saturated, which is known as the critical moisture content, a value characteristic of each type of material from which the sample is composed. Further additions of water result in moisture being held externally to the particle. When the water added to a dry sample is less than the amount needed to exceed its critical moisture content, the sample mixture can be sealed in a container and will, in time, become homogeneous with the water evenly distributed throughout. The sample will, however, remain heterogeneous once the critical moisture content of the mixture is exceeded. In such cases where external moisture is present, it is difficult to get reproducible analytical results from small sample sizes since the small samples are not particularly representative of the whole of the material from which they are taken.

Currently, there are many methods for analysing water in solid samples such as by the absorption of reflected or transmitted electromagnetic radiation, such as Near-Infrared, microwave, gamma rays, or by resulting weight loss on heating thermally or by radiation. It can also be performed using a chemical Karl Fisher reagent which extracts the moisture with a hydrophilic organic solvent or by dropping a solid sample into the Karl Fisher reagent before the titration. Although these methods are selective for water, the end result is only quantitative, giving only the total moisture or surface moisture present and they do not characterise the behaviour of the solid sample during a subsequent drying process. The smaller sample sizes usually being interrogated by these methods make it difficult to obtain reproducible analysis when external moisture is present. The methods based on weight loss on drying are usually performed on static samples and, therefore, the rate of drying is effected by the bulk packing properties of the wet solid and uneven heating of the sample that occurs. To ensure complete drying in these cases, samples are normally dried for several hours since monitoring moisture content by weight loss on static samples at any point prior to total dryness being achieved is notably inaccurate. The measurement of weight change is non-selective and therefore reflects not only total moisture but all other sorbates that have also been removed from the sample during drying.

The drying process of larger sample sizes (10 grams and above) can only be made reproducible by ensuring that the sample mixes thoroughly during drying so that it will be heated evenly throughout and sorbate will be lost from all particulate surfaces in a relatively unhindered fashion. This can be best achieved by the process of fluidising the sample with heated air (or gas) as the source of heat and means of removing the sorbate. A fluid bed dryer accomplishes this and is the best means of getting reproducible drying which is required for meaningful analytical results to be obtained during the drying process.

Using a laboratory based fluid bed dryer, it is currently possible to obtain a total moisture content on a large solid particulate sample, and to estimate crudely the manner by which the moisture is being held within the sample. This can be accomplished by weighing the sample manually at various times as it dries. This procedure is labour intensive and inherently inaccurate, particularly in characterising the drying process, since this manual method requires the operator to perform repeated weighings of the sample at various times during the drying process, thereby stopping the drying procedure. The difficulties in using this approach currently outweigh the benefits and this is not considered a convenient method for moisture analysis.

Sorbent / sorbate analytical systems have been introduced which effectively weigh the stationary sorbate sample on a microbalance during the sorption and desorption process. These systems can measure tenths of one percent of moisture in a sample, but do not differentiate external from internal moisture. When trying to apply this approach to larger samples, which are continually mixed during the sorption / desorption process, a major difficulty arises from the vibrations which occur during the mixing process. It is difficult to isolate the sorbate in a manner that allows only the sorbate to be weighed. It is possible to rest the instrument plus sample on load cells and measure the total weight. There is a difficulty in trying to measure accurately to a 1 gram accuracy (corresponding to a 1 kilograms sample and hence tenths of one percent moisture) when the instrument weight which must be tared is approximately 20 kilograms. Buffering such a system to reduce noise would effectively reduce the response time of the measurement.

The approaches that can be taken to optimise moisture removal are quite different depending on how the moisture is held. During the removal of external moisture, provided the sample is thoroughly mixed while drying, the sample's particles are protected from thermal degradation through the evaporation of water which absorbs heat, whereas the removal of internal sorbate is generally a more vulnerable process since the outside of the particles can easily overheat. Internal sorbate removal can also be accompanied by particles collapsing, shrinking and changing in chemical composition, all of which can be affected by the rate of sorbate loss during the drying procedure. Furthermore, a change in the critical moisture content of a sample is indicative of a chemical or physical change having taken place that may result in other process variables being affected, such as extraction of catalyst residues or washing/rinsing times during solvent removal.

The present invention aims to provide a method of analysis and apparatus which permits the sorbate content of a sample to be analysed quickly and accurately, for sorbate / sorbent samples to be studied under a range of controlled conditions and for the information that has been obtained to be applied subsequently to analytical preparation of solid samples . It allows samples that are prepared using a carefully defined programme to be monitored repeatedly to ensure that such samples behave in the predicted manner and results of such preparations are stored to provide subsequent validation on each sample preparation. The analytical method provides a means of evaluating sorbate / sorbent samples used in plant operations in order to establish that a given sorbent is suitable to a given application and is fit for service.

According to the present invention, there is provided an analytical method for monitoring the desorption of a sorbate from a particulate sample, the method comprising the steps of:
introducing the particulate sample into a control container,
mixing the sample;
passing a carrier gas through the container such that it permeates the sample;
repeatedly measuring the concentration of the sorbate in the outlet gas as it leaves the container; and
analysing the readings from the measuring step.

The invention also includes an analytical method for monitoring the sorption of a sorbate in a carrier gas by a particulate sample, the method comprising the steps of:
introducing the sample into a control container;
mixing the sample;
passing the carrier gas and sorbate through the control container such that it permeates the sample;
repeatedly measuring the concentration of the sorbate in the outlet gas as it leaves the container; and
analysing the readings from the measuring step.

By introducing the solid sample into a space in which may be restricted by means of filters, so that none of the sample can escape but allows the carrier gas and volatile sorbate to pass through, the sorbtion process can be monitored by measuring the sorbate concentration in the carrier continuously as it enters the restricted space, and again prior to it leaving the contained area holding the sample. By means of a material balance, it is possible to calculate the change in sorbate concentration in the sample provided we know the amount of sample present is known.

To extend this measurement technique to a wide range of sorbates, a wide range of detectors capable of selectively monitoring the presence and concentration of various types of volatile compounds that may be present in the carrier could be used. When considering a gaseous carrier, the detector(s) could be for detecting any water, hydrocarbons, ammonia, carbon dioxide, oxides of nitrogen, oxides of sulphur, hydrides and other volatile substances, all of which can be the sorbate in a selected sorbate/sorbent system.

Furthermore, it is realised that a sorbent may contain active sites, which are primarily involved with the capture and retention of a particular sorbate, and these sites can be activated or de-activated by the introduction of a releasing or activating agent either together with or just prior to the introduction of the sorbate / sorbent and/or by varying the temperature of the carrier gas and/or sample. The releasing or activating agent may be added via the carrier. Acidic gases are effective in releasing carbon dioxide from metal oxide containing sorbents and small quantities of water repelling agents can make hydrophyllic sorbents far less effective for drying gases.

In the case where the sorbate is a liquid, such as water or a hydrocarbon, and the carrier is a gas, the invention pertains both to the drying of solid particulate samples having a measurable moisture content (currently 10 ppm and higher for water), and also the removal of moisture from a carrier gas by a particulate sample.

In the case of the sorbate being a liquid, we are able to monitor continuously the moisture loss from the sample by way of the carrier gas measurement throughout the drying process in a highly controlled way. The total moisture content of the sample can be ascertained, along with a differentiation between the moisture being held internally within individual particles known as the internal moisture content and that which is held outside the solid particulate known as the external moisture content.

Further differentiation can occur between physically and chemically bound water, types of waters of hydration and so forth, particularly when higher temperatures or temperature programming is employed. Differentiation is based on the fact that the different forms of water are released sequentially over time in a manner depending on the conditions being employed. This introduces a valuable qualitative aspect to moisture analysis.

The invention described monitors the carrier gas phase for the volatile sorbate selectively as opposed to measuring the sorbate with a non-selective measurement of weight, and thereby, eliminates the problems associated with trying to duplicate the manual method. It also enhances the sensitivity of measurement, allows several sorbents to be monitored simultaneously, and improves the time resolution which improves the qualitative aspects of the technique.

The information gained by using the analytical mode of the apparatus of the invention is more easily obtained, quicker to obtain, and less subjective than is possible using manual methods using a laboratory fluid bed dryer. It is less labour intensive and less subject to errors since the manual procedure requires the operator to remove the sample for it to be weighed in order to determine weight loss. Since the invention allows the water sorbate to be measured continuously and the information to be derived from the analysis to be processed several times a second, the much higher resolution that results provides additional information which is not possible to obtain using the manual method and a fluid bed dryer. Using the analytical mode of the invention, provisions can be made to analyse from grams up to several kilograms of sample and from low parts per million to high percentage levels of sorbate held as water.

The value of the qualitative information from the analysis is considered as follows. The rate of removal of external moisture during drying is directly affected by process parameters, such as temperature, air flow and mixing of the sample; whereas the removal of internal moisture is less affected by these process parameters and is more dependent on sample characteristics, such as particle size, porosity, swelling of sample and chemical composition. The moisture analysis provided by the invention provides valuable practical guidelines for processing a sample on a plant scale.

Both the above analytical methods can be further enhanced in a configuration whereby the outlet carrier gas from the controlled container is re-introduced to the controlled container as the inlet gas in order to ensure an equilibrium condition under the defined conditions of the experiment has been achieved.

It is preferable that the sorbate concentration is measured with respect to at least one of the following: time, the amount of carrier permeated through the sample, the temperature of the sample and/or carrier gas, or the amount of releasing or activating gas introduced.

The substance to be detected may be water, carbon dioxide, a hydrocarbon, ammonia, oxides of nitrogen, oxides of sulphur, hydrides or other volatile compounds or compounds that could be made volatile. When water is to be detected, the measuring step measures the relative humidity of the outlet gas, that is given as a percentage of the total amount that could be held when the carrier is saturated with water. The amount of water that can be held in a carrier varies with temperature. By monitoring the temperature of the outlet carrier as well as humidity, we are able to convert to an absolute humidity value (that is grams of water per a volume of carrier). Temperature corrections would be normal with most of the other detectors being considered.

The measuring step measures a sorbate comprised of water, a hydrocarbon, oxygen, carbon dioxide, ammonia, oxides of sulphur, oxides of nitrogen, oxygen, hydrides or any other compound or group of compounds that can be made volatile.

It is preferable in our invention to provide the mixing of the sample by passing the carrier through the sample container in a manner that passes the carrier through the particulate sample and creates a fluidised bed. Alternatively or additionally, the mixing of the sample may be performed by either rotating or vibrating the control container or pulsing the flow of carrier gas through the control container. It is important with more delicate samples that the mixing of these sample is not carried out by simply stirring the sample mechanically as this is very abrasive and damages the particles, changing their size and therefore sorbate retaining characteristics.

The temperature of the carrier and sample may be controlled.

The measurement of sorbate concentration may be made with respect to the temperature of the sample or carrier.

The flow rate of carrier may be controlled to achieve a desired mixing of the particulate sample.

The method may also comprise one or more of the following steps: measuring the inlet gas temperature, measuring the inlet gas humidity and measuring the flow rate of gas through the container.

The measuring step measures the loss from the sample of the sorbate or with the alternative analytical configuration, the loss from the carrier gas and gain by the sample of the said volatile component. When it is desirable to obtain a steady state equilibrium constant or partition coefficient between sorbate in the carrier gas versus that in the solid sample, the recirculated carrier gas can be monitored until a steady state has been achieved before changing to a new condition, such as obtained when varying the temperature. Measurements of sorbate are made in a manner which can show the change of the rate of the sorption / desorption process as well as the total amount of sorbate present. These measurements are normally compared to influencing parameters such as temperature, carrier flow rate and releasing and activating agents that can be added. In cases where a sorbent is known to be active for several sorbates, multiple detectors can be used simultaneously.

The analysis of the readings, when a liquid such as water is the substance to be detected, may include: the critical moisture content, the absolute content of moisture in the sample, the amount of moisture external to the particles of the sample, the amount of internal moisture in the particles of the sample, the amount of internal moisture which is adsorbed and the amount of internal moisture which is absorbed and the rate of sorbate transfer from sorbent to carrier and vice versa.

Preferably the sample is weighed before being introduced into the control container and/or after the drying of the sample or the carrier gas finished.

The present invention also includes a sorbate analyser comprising:
a control container in which a sample is placed, the sample containing a sorbate and a particulate material sorbent;
a means for mixing the sample;
a means for permeating a carrier gas through the sample;
a sensor within the container which, in use, measures the sorbate concentration in the outlet gas; and
a microprocessor for analysing the readings from the sensor.

Preferably the analyser further comprises a temperature sensor within the container which, in use, measures the temperature of the gas as it leaves the container.

A plurality of sensors may be used to monitor the concentrations of several sorbates during the same process.

The analyser preferably includes a blower motor for generating the carrier gas flow through the container using ambient air as the carrier. When the gas is blown through the particulate sample, it is preferred that a fluidised bed is created. Additionally, the analyser comprises a mechanism which may pulse the flow of gas through the sample to facilitate mixing.

Preferably the analyser further comprises a mechanism which rotates or vibrates the control container or pulses the carrier gas flow to mix the sample.

The moisture water analyser preferably includes an inlet gas temperature sensor, a gas flow rate sensor to determine the flow rate through the container, an inlet gas humidity sensor, an inlet and/or an outlet gas filter and a heating element and thermostat for heating the inlet gas to the required temperature.

The same apparatus can be used to establish drying parameters which are required to achieve a particular result in the product processing and which can subsequently be programmed into the microprocessor in order to dry or prepare samples in order to contain a pre-designated moisture content, remove all the moisture as quickly and delicately as possible, or remove external moisture only. This can be applied directly to a plant scale operation manufacturing a product. Product prepared in this manner can have advantages offered in preserving the product, maximise profits, or make the product more amenable to a further processing, such as pressing tablets from powder.

The normal amount of moisture found in solid particulate samples vary greatly depending on the type of sample. The way the moisture is distributed varies according to the material composition of the sample. The "high" percentage levels ranges from 10% with samples of diakon acrylic polymer, 25% for coal, 58% for asbestos to as high as 95% for some 5 µm particle size dye stuffs. For samples having a significant external moisture content, sample sizes of 500 grams and upward were found to give improved reproducibility.

In addition to providing an analysis of drying for a sample, and a programmable dryer which can dry samples to obtain a known sorbate content, all the information related to the actual drying procedure (such as inlet temperature, outlet temperature, humidity of air, flow rates and duration) of the sample is monitored and downloaded to a computer for subsequent analysis by the operator during each drying procedure. This information is stored, along with the program showing the set parameters. This facility enables a user to ensure that a sample has actually dried in the manner that the analysis has predicted and that the product obtained at the end is the one that has been anticipated at the outset. In this way, validation can be provided for each sample that is dried and differences can be noted.

One embodiment of the present invention being used for moisture analysis will now be described with reference to the accompanying drawings, in which:
Figure 1 is a schematic view of the present invention;
Figure 2 is a view of a cartridge for use in the apparatus of the present invention;
Figure 3 is a graph showing a temperature vs humidity plot generated by the present invention when new wet silica is dried;
Figure 4 is a graph showing a temperature vs humidity plot generated when old wet silica is dried; and
Figures 5 to 7 are screen shots from the computer program used to analyse the readings obtained by the present invention.

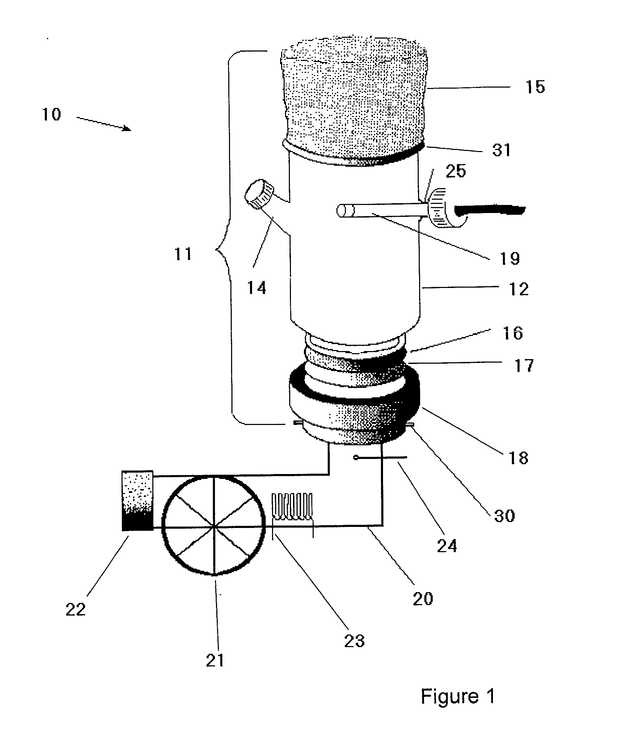

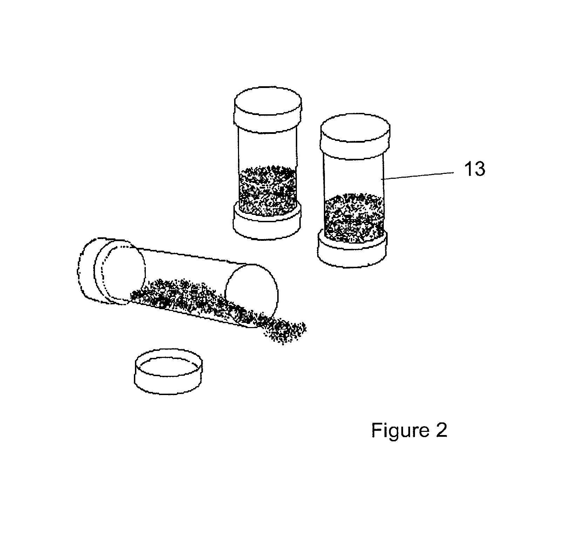

Figure 1 shows a sorbate analyser 10 having a control container 11. The control container is comprised of a substantially cylindrical main body 12, preferably formed from a transparent material such as glass, into which a cartridge 13 containing a weighed sample (see Figure 2) is emptied and the empty container subsequently tared. The sample is inserted through inlet 14 in the control container 11. The upper end of the main body 12 is connected to an outlet filter 15 though which the outlet gas is filtered. The outlet filter 15 is connected to the upper end of the body 12 by means of a compression clamp 31. Although not shown, it is possible to recirculate the outlet gas back into the inlet using a specially designed filter cap, especially if it is desired that the sorbate concentration distribution reaches an equilibrium between the sample and carrier gas. An inlet filter 16 is provided at the lower end of the main body 12 and filters the inlet air to the body 12. The holes in the inlet filter 16 and outlet filter 15 are sized so as to prevent the particulate sample falling through the bottom of control container 11 or leaving through the top with the carrier gas. The inlet filter 16 is mounted on a support filter 17 which bears the majority of the weight of the sample and which, in turn, is connected to the container base 18. A probe 19 extends to the inside of body 12 and, in this example, it is a temperature and relative humidity probe. Different types of probe can be used depending upon the nature of the substance which is to be detected. A separate temperature probe could also be used if required.

The lower end of the container base 18 is connected, by means of bayonet fitting 30, to an air passageway 20 for the supply of air to the control container 11. A fan 21 generates an air flow into and through the body 12. Upstream of the fan 21, an air inlet filter 22 is provided to ensure that any unwanted particulate material is prevented from entering the control environment within the container 11. A heating element 23 can be utilised to ensure the temperature of the inlet gas is at the required level and this can be verified using inlet temperature sensor 24.

Although not shown, the analyser is also provided with a microprocessor which can be programmed to control the operation of the fan 21 and heating element 23 such that the analyser follows a specific drying program. The microprocessor can also be programmable so that it responds to preset conditions for the humidity, outlet temperature or time before proceeding to the next step of drying. Furthermore, the fan 21 can also be controlled, preferably via the microprocessor, such that it allows the air flow through the body 12 to be pulsed by means of an oscillating inlet valve (not shown) whereby the frequency of pulse and duration can be altered. This is particularly beneficial at the start of the gas flow to initiate movement of the wet sample so that fluidisation can be established.

The fan supplies a controlled and monitored flow of drying gas. In the example given, air is used as the drying gas and it is filtered at the inlet. A feedback control device (not shown) is used on the motor of the fan which monitors the rpm value. Mass flow detection of the drying gas can be used on the inlet, for example by using a heated wire detector, as the density of the drying gas is variable with pressure and temperature. The heater 23 is provided with a thermostat and, in conjunction with the temperature sensor 24, monitors the drying gas prior to it being passed through the sample. The container has a side port 25 through which one or more detectors, in this example probe 19, can be inserted, and another side port 14 for rapid sample introduction (an advantage for the analytical function). Each control container may have specific inlet and outlet filters for different tasks or substances being used and can be assigned a filter factor related to the resistance offered to air flow. "Filter factor" is explained in greater detail later. This can be used to determine the flow rate of drying gas through the control container given a measured amount of air flow coming from the instrument outlet.

Detector probe 19 extends into the body 12 and has a calibrated humidity sensor (capacitive or resistive) and a protective outer surface. It incorporates a temperature sensor and the whole probe fits through the side port 25 on the tub assembly.

The side port 14 facilitates the loading of a sample which is held in a sealed cartridge in a manner which minimises sample or sorbate loss. The sample is initially collected, stored and allowed to come to a constant temperature prior to introduction to the analyser. The sample is then weighed in its sealed cartridge prior to its insertion into the body 12. The analytical control body 12 is preheated to the desired starting temperature before the insertion of the sample and then the flow of carrier gas is momentarily stopped to allow the introduction of the sample. The side port 14 which is normally sealed is opened to introduce the sample, and after transfer of the sample from the cartridge it is quickly sealed to minimise sorbate or sample loss and the carrier gas is re-introduced, this time permeating the sample. In the example given the carrier gas is air.

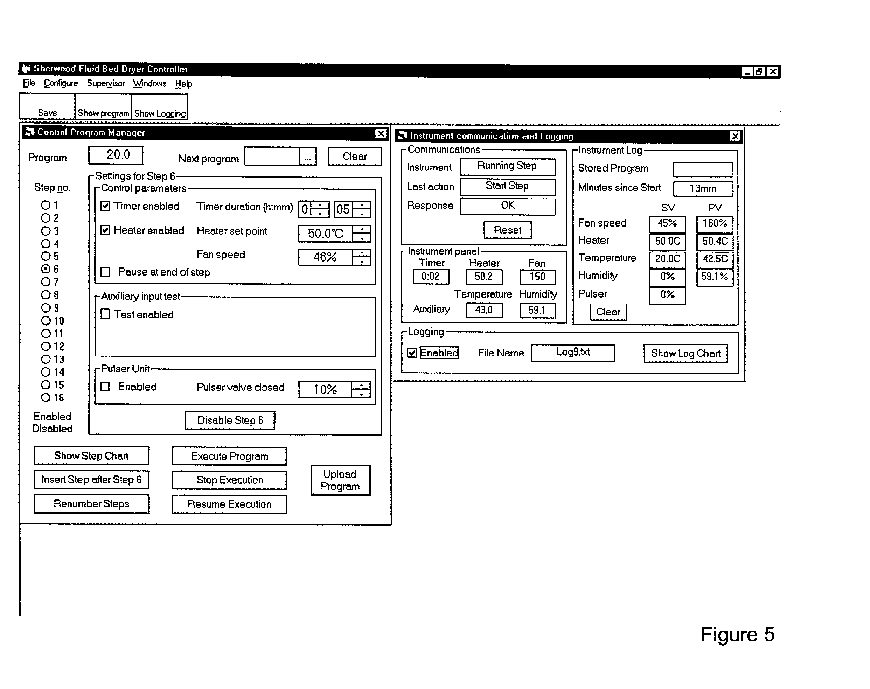

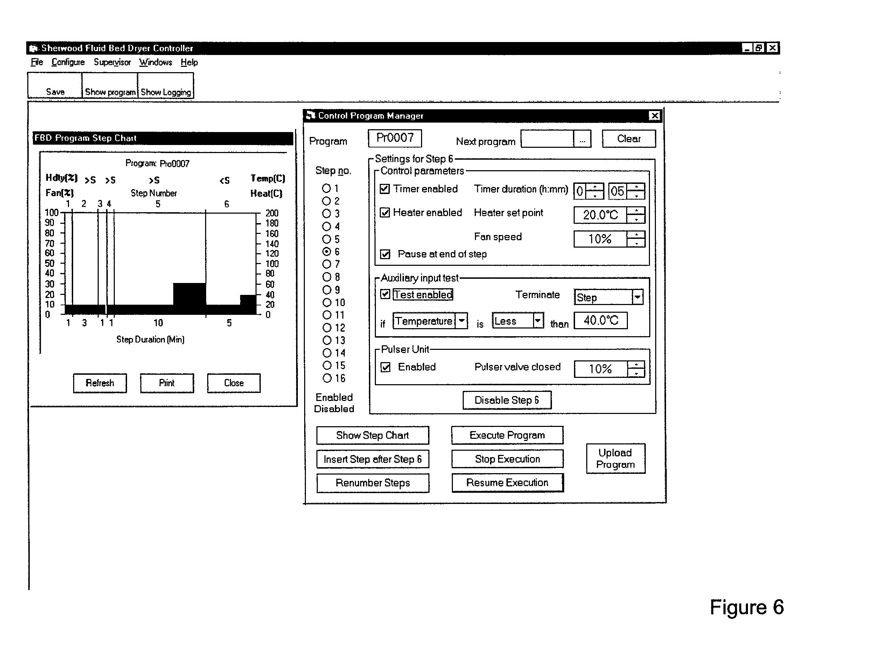

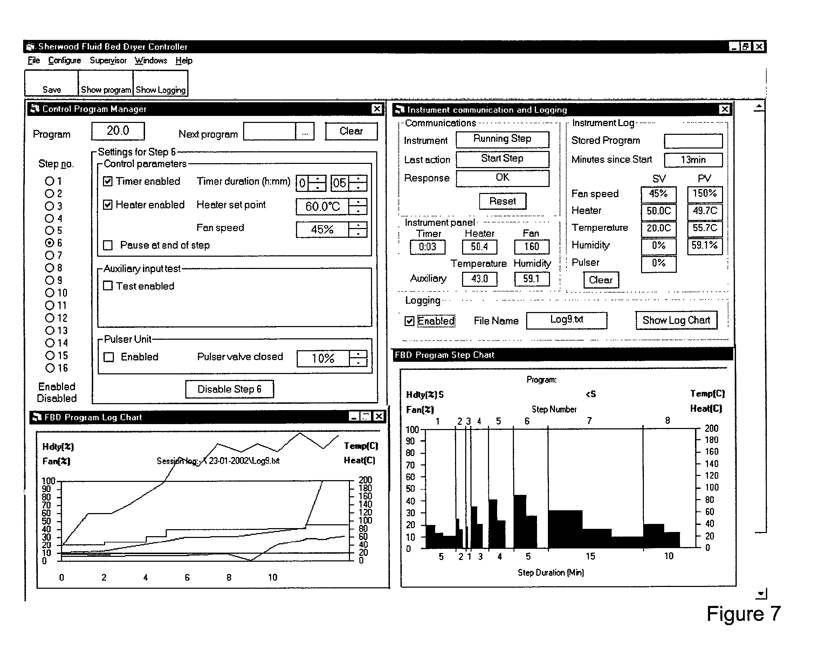

The instrument is pre-programmed using purpose written software and a computer. A single programme can offer the user the possibility of going through a series of steps whereby the operating conditions of inlet temperature, flow rate, and pulse flow can be defined along with the definition of the end point of the step whereby the instrument moves on to the conditions of the next step. The end point can be based on either a duration of time being achieved, or a certain outlet temperature being reached or a particular humidity value being achieved. Which of these priorities is used to achieve an end point and the actual value that would trigger going to the next step of the programme is defined during the programming. The option exists to stop any particular step to allow manual intervention before continuing the programme. There is also the option to use pulse flow and vary the frequency and duration of the pulses during each step. Up to 18 steps can be used in a single programme which can be named and stored in the computer for later use. Finally, there is the ability in the programming to link programmes to run sequentially, thereby giving the operator a means of running an virtually unlimited number of steps during an drying operation. A number of screen shots from the computer program are shown in Figures 5 to 7.

Typically the present invention incorporates a fluid bed dryer which can be operated as a conventional lab scale fluid bed dryer. It can also be operated in a moisture analysis mode or in an analytical drying mode whereby all measurements are monitored and recorded. The data stored while drying can be stored and analysed subsequently by the analytical software.

### Normal Fluid Bed Dryer Operation

The fluid Bed dryer can be operated manually simply be setting the appropriate conditions of the dryer itself and entering a "run" command. The Dryer also has the ability to hold and use a single programme, without using the computer. Interfacing with a computer allows a wide range of programmes to be programmed, named, and re-called and activated when appropriate or required. A facility is provided to allow programmes to be linked to follow each other sequentially, thereby offering total flexibility in programming.

### Moisture Analysis Mode

The moisture analysis mode is achieved by using the programmable fluid bed dryer with the sensors as described, a computer interfaced to the dryer, and purposely written programmes aimed at particular sample applications, plus an analytical software package.

The analytical function of the instrument operates in the following manner.

Prior to starting the analysis, the sample(s) are taken and stored in a sealed sample cartridge 13 at the desired temperature until they reach equilibrium. Initially, the operator is requested to input some information such as the sample identity number and/or description, operating programmes for the analysis and dryer and/or conditions, such as flow rate, time of analysis, and temperature, and filter factor. If information required is not known, the operator may choose to run a general analytical programme containing pre-set options.

The operator starts the analysis program which turns on the dryer and sets conditions, without a sample, and preheats or cools it to achieve the correct starting temperature for the analysis. During this "conditioning" stage, the background relative humidity of the ambient air is established for subsequent corrections. A filter factor, if unknown and not pre-set, is automatically determined by a set-up procedure. When the start up conditions have been achieved, the unit pauses and prompts the operator to introduce the sample on the computer screen. After introducing the sample through the side port 14 using a sample cartridge 13, the operator enters a command to continue the analysis. If the command to continue is not received within 1 minute of the prompt, the preconditioning step must be restarted. On receipt of the correct response to continue the analyses within the acceptable time period, the analysis commences and another prompt is displayed on the computer screen for the operator to enter the sample weight (from 100 to 1000 grams in the current configuration). The analysis is normally achieved in a time ranging from 10 to 60 minutes, during which period the humidity, temperature and time is continuously monitored.

It is possible to establish an accurate air flow rate for a particular fan 21 and to relate it to the rpm of that fan. The volume of air will, however, vary with the back pressure being placed on the air flow. The absolute amount of air flowing through a sample will depend on the resistance to the flow, which varies with back pressure.

In particular, the main variable to resistance to flow is due to the types of inlet and outlet filters used on the tub assembly. These filters can become partially blocked on account of, for example, residues of evaporation blocking the individual pores within the filers. Accordingly, when a filter becomes even partially blocked, the flow rate permitted through that filter is reduced.

A "filter factor" is a number that represents the fraction of flow going through the analyser as compared to the unobstructed output from the fan, which could be established by measuring its rpm. For example, a "filter factor" of 0.5 permits half the expected amount of air to be blown through the analyser. It is possible to measure the "filter factor" by running an empty analyser on the programmable drive, using a specific program which raises the temperature up and down whilst adjusting the fan speed. By examining flow variations between the inlet and outlet to the analyser, it is possible to determine the filter factor for that particular analyser.

This function is particularly useful for establishing whether the filters on a given control container are partially blocked, which would affect the analytical results. Either the new filter factor can be used for the subsequent analysis or the filters can be cleaned, or the filters can be changed to new filters. The filter factor check can be implemented during the routine conditioning step at the outset of the analysis. Using the filter factor, flow rates determined from the instrument, temperature and humidity measurements, and the time, it is possible to calculate the absolute amount of sorbate being lost and, integrating over time, establish a drying curve for the sample.

Two alternative methods can also be used to establish a filter factor. The first relies on the introduction of a weighed sample "standard" containing a known amount of moisture. The second relies on introducing a weighed sample initially and then using the dry sample weight following the drying procedure. Both these alternative methods can be accommodated in the software of the moisture analysis.

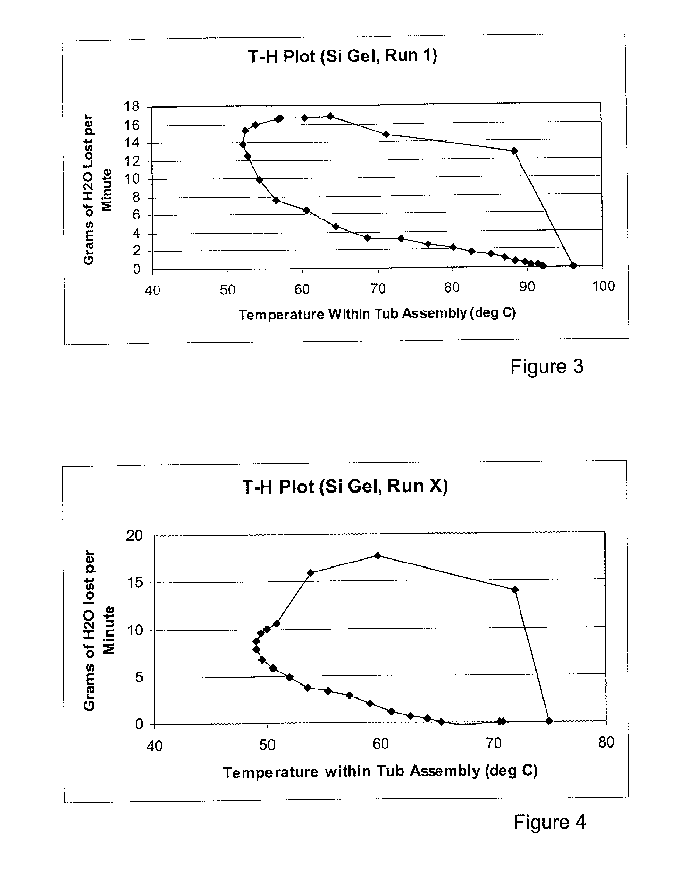

In both Figures 3 and 4, which are temperature vs humidity plots established for wet silica, the initial reading at t = 0 is that on the far right of the graph. Subsequent readings are taken at one minute intervals and are then shown by following the graph anticlockwise. The critical moisture content corresponds to the point at which all external moisture has been removed and only internal moisture remains. The critical moisture content may be noted when the humidity falls to a specific level, the level being dependent upon what substance is being analysed, or even when a certain ratio of temperature to humidity is reached. The particular point at which the critical moisture content is reached is determined by analysing the particular plots which are generated for each sample, however it is generally the point at which the constant rate moisture loss ends.

It is also possible to determine whether the internal sorbate or moisture is held within a particulate sample as absorbed whether it is held as adsorbed sorbate or moisture in the outer surface layers. In particular, this can be appreciated by considering the different plots in Figures 3 and 4. In Figure 3, "fresh" silica gel is used and this is gel which has not been subjected to repeated drying and re-wetting. The sample of Figure 4 has been used repeatedly and is "decrepitated". This is a form of degraded silicon gel in which the individual particles are damaged by recycling and form smaller particles.

In both examples, the humidity and temperature reading is monitored and recorded each minute, along with data concerning the flow rate, and the results are converted to absolute grams of water loss per minute. It can be seen how the reading at t = 1 shows the temperature dropping and the humidity rising as the sample is heated. Points 2 through 8 are taken when external moisture is coming off the sample at a substantially constant rate until all the external moisture is released. Points 9 though to the end show internal moisture coming off the sample and this rate is limited by the diffusion rate of the moisture through the particles of silica gel. The critical moisture content is reached at point 9, which, in this example, corresponds to the lowest temperature.

This can be compared with the plot for decrepitated silica shown in Figure 4 in which only the points corresponding to t = 1 to 3 relate definitely to external moisture and points at t = 8 onwards correspond to absorbed internal moisture.

A new zone, evident here at t = 4 to t = 7 lies below the critical moisture content, in this example at t = 4. The new zone in points 4 to 7 corresponds to the adsorbed moisture which is near to the surface of the particles being drawn off the silica. Accordingly, the points from 8 upwards are considered absorbed moisture.

The outputs from the analyser can include the following: the total moisture content of the sample (% weight), the amount of internal sorbate (% weight), the amount of adsorbed sorbate (% weight), the amount of absorbed sorbate (% weight), the amount of external sorbate (% weight), the critical sorbate content and the time to drying down to 50% sorbate content and to greater than 99% sorbate content. A drying (moisture removal) curve can be generated showing a graph of percentage sorbate versus time. A rate curve can be generated showing the rate of sorbate loss over percentage sorbate.

Furthermore, an optimum drying programme can be suggested to minimise the time of drying while protecting the sample from thermal degradation.

Furthermore, drying conditions can be recommended to achieve removal or only external moisture or to obtain a sample of a particular moisture content.

In this example using silica gel the amount of Internal Adsorbed Moisture is indicative of the amount of decrepitation in the drying bed.

### Analytical Drying Mode

In this mode, a computer is required which gathers and stores information from all the sensors and detectors that are available, which include inlet and outlet temperatures, humidity (or sorbate concentration), flow rates, and pulse flow operating mode. The actual results obtained are set against and compared to the settings of the programme being run. A facility is provided to analyse the data obtained in order to validate a samples performance.

## Claims

1. An analytical method for monitoring the desorption of a sorbate from a particulate sample, the method comprising the steps of:
introducing the particulate sample into a control container,
mixing the sample;
passing a carrier gas through the container such that it permeates the sample;
repeatedly measuring the concentration of the sorbate in the outlet gas as it leaves the container; and
analysing the readings from the measuring step.

2. An analytical method for monitoring the sorption of a sorbate in a carrier gas by a particulate sample, the method comprising the steps of:
introducing the sample into a control container;
mixing the sample;
passing the carrier gas and sorbate through the control container such that it permeates the sample;
repeatedly measuring the concentration of the sorbate in the outlet gas as it leaves the container; and
analysing the readings from the measuring step.

3. A method according to either claim 1 or claim 2, wherein the carrier gas recirculates from the outlet of the control container to the inlet of said chamber in order to establish an equilibrium concentrations of sorbate in sorbent under set conditions.

4. A method according to any one of claims 1 to 3, further comprising the step of adding a releasing or activating agent to affect the sorbate / sorbent system.

5. A method according to claim 4, wherein the releasing or activating agent is added via the carrier.

6. A method according to claims 1 to 5, wherein the sorbate concentration is measured with respect to time.

7. A method according to claims 1 to 5, wherein the sorbate concentration is measured with respect to the amount of carrier gas permeated through the sample.

8. A method according to claims 1 to 5, wherein the sorbate concentration is measured with respect to the amount of releasing or activating gas being introduced along with the carrier gas.

9. A method according to any one of the preceding claims, wherein the substance to be detected is water and the measuring step measures the relative humidity of the outlet gas.

10. A method according to claim 9, further comprising the steps of measuring the temperature of the outlet gas and then calculating the absolute humidity of the outlet gas from the relative humidity and temperature readings.

11. A method according to any one of claims 1 to 8, wherein the measuring step measures a sorbate comprised of a hydrocarbon, oxygen, carbon dioxide, ammonia, oxides of sulphur, oxides or nitrogen, oxygen, hydrides or any other compound or group of compounds that can be made volatile.

12. A method according to any one of the preceding claims, wherein the step of passing a gas through the container also passes the gas through the sample to create a fluidised bed.

13. A method according to any one of the preceding claims, wherein the mixing of the sample is carried out by rotating the control container.

14. A method according to any one of the preceding claims, wherein the mixing of the sample is carried out by vibrating the container.

15. A method according to any one of the preceding claims, further comprising at least one of the following steps: measuring the inlet gas temperature, measuring the inlet gas humidity and measuring the flow rate of gas through the container.

16. A method according to any one of the preceding claims, wherein the temperature of the carrier and sample may be controlled .

17. A method according to any one of the preceding claims, wherein the measurement of sorbate concentration is made with respect to the temperature of the sample or carrier.

18. A method according to any one of the preceding claims, wherein the flow rate of carrier is controlled to achieve a desired mixing of the particulate sample.

19. A method according to any one of the preceding claims, wherein the analysis of the readings provides at least one of the following values: the critical sorbate content, the absolute water content of the sample, the amount of sorbate external to the particles of the sample, the amount of internal sorbate in the particles of the sample, the amount of internal sorbate which is absorbed and the amount of internal sorbate which is adsorbed, the rate of change of sorbate concentration in the carrier or in the sample.

20. A method according to any one of the preceding claims, wherein the sample is weighed before being introduced into the control container and/or after the drying of the sample or the carrier gas has finished.

21. A sorbate analyser comprising:
a control container in which a sample is placed, the sample containing a sorbate and a particulate material sorbent;
a means for mixing the sample;
a means for permeating a carrier gas through the sample;
a sensor within the container which, in use, measures the sorbate concentration in the outlet gas; and
a microprocessor for analysing the readings from the sensor.

22. An analyser according to claim 21, further comprising a temperature sensor within the container which, in use, measures the temperature of the gas as it leaves the container.

23. An analyser according to either claim 20 or claim 21, wherein a plurality of sensors are used to monitor the concentrations of several sorbates during the same process.

24. An analyser according to any one of the above claims, further comprising a blower motor for blowing gas through the container.

25. An analyser according to claim 24, wherein the fan blows a gas through the sample to create a fluidised bed.

26. An analyser according to any one of claims 21 to 25, further comprising a mechanism which rotates or vibrates the control container or pulses the carrier gas flow to mix the sample.

27. An analyser according to any one of claims 21 to 26, further comprising a mechanism which pulses the carrier flow to mix the sample.

28. An analyser according to any one of the above claims, further comprising at least one of the following: an inlet gas temperature sensor, a gas flow rate sensor to determine the flow rate through the container, an inlet gas humidity sensor, an inlet and/or an outlet gas filter and a heating element for heating the inlet gas to the required temperature.

29. A drying apparatus including a sorbate analyser according to any one of claims 21 to 28.
